# FASCICULE DE BREVET EUROPEEN

(11) **EP 0 961 053 B1**
(45) Date de publication et mention de la délivrance du brevet: **27.06.2007**
(21) Numéro de dépôt: 99118175.1
(22) Date de dépôt: 13.05.1997
(51) Int. Cl.: F16H 1/16, E05F 15/16, H02K 7/08, H02K 7/116

(54) **Motoréducteur notamment pour l'entrainement d'équipements de vehicules**
Getriebemotor, insbesondere zum Antrieb von Zubehörteilen in Kraftfahrzeugen
Geared motor, particularly for operating vehicle fittings

(30) Priorité: 13.05.1996 FR 9605924; 11.03.1997 FR 9702873
(43) Date de publication de la demande: 01.12.1999
(62) Demande divisionnaire de: 97924086.8
(73) Titulaire: Meritor Light Vehicle Systems-France, 92082 Paris La Defense 2 (FR)
(72) Inventeur: Quere, Jérôme, 14112 Bieville-Beuville (FR); Laurandel, Hervé, 14000 Caen (FR)
(74) Mandataire: Jacobson, Claude

(56) Documents cités:
- DE-A- 2 952 408
- US-A- 5 095 766
- US-A- 5 307 704

## Description

La présente demande est une demande divisionnaire de la demande de brevet européen EP 0 898 666 (correspondant à WO9743564).

La présente invention a pour objet un motoréducteur, notamment pour l'entraînement d'équipements de véhicules, du type défini au préambule de la revendication 1. Un tel motoréducteur est par exemple connu de US 5 027 670.

Les carters réducteurs des motoréducteurs actuels comprennent les pièces suivantes : roue dentée, moyeu, joint d'étanchéité à lèvre, couvercle et tambour en matière plastique pour l'enroulement d'un câble, par exemple, de lève-vitre ou pignon en acier fritté et moyeu en matière plastique surmoulé. Ce moyeu intermédiaire, interposé entre l'amortisseur et le tambour de sortie, permet d'entraîner ce dernier par l'amortisseur. Dans une autre réalisation connue, l'organe de sortie est un pignon fritté sur lequel un moyeu est surmoulé. Ce moyeu, entraîné par l'amortisseur, assure l'entraînement du pignon de sortie.

Ces structures comportent un nombre relativement élevé de pièces, ce qui entraîne un coût de fabrication relativement important.

L'invention a pour but de réaliser un motoréducteur de structure simplifiée par rapport aux motoréducteurs connus grâce à une réduction du nombre de ses pièces, et qui soit par conséquent, d'un coût de fabrication inférieur.

Conformément à l'invention, le motoréducteur comporte les caractéristiques visées à la partie caractérisante de la revendication 1.

D'autres particularités et avantages de l'invention apparaîtront au cours de la description qui va suivre, faite en référence aux dessins annexés, qui en illustrent plusieurs formes de réalisation à titre d'exemples non limitatifs.

La figure 1 est une vue éclatée partielle, sensiblement à l'échelle d'une forme de réalisation d'un motoréducteur et plus particulièrement de son carter réducteur.
La figure 1A est une vue en coupe partielle suivant la ligne 1A-1A de la figure 1 d'un joint d'étanchéité entre la paroi du carter et une collerette de la roue dentée.
La figure 2 est une vue en coupe longitudinale et élévation partielle à échelle agrandie d'une extrémité de l'arbre d'induit et de la paroi de carter, illustrant des moyens de réglage automatique du jeu axial.
La figure 3 est une vue en coupe longitudinale et élévation partielle à échelle agrandie d'un bout de l'arbre d'induit et du stator, illustrant un mode de réalisation d'une bague interposée entre l'arbre et le stator.
La figure 4 est une vue en perspective d'un pignon constituant l'organe de sortie du motoréducteur selon l'invention.
La figure 5 est une vue en élévation longitudinale et coupe partielle du motoréducteur muni d'un dispositif de compensation automatique du jeu axial de sa ligne d'arbre.
La figure 6 est une vue en coupe partielle à échelle agrandie par rapport à la figure 1 d'une forme de réalisation des moyens de réglage du jeu axial entre l'extrémité de l'arbre d'induit et la paroi du carter, le dispositif étant au repos avant mise sous charge.
La figure 7 est une vue en coupe transversale suivant 7/7 de la figure 6.
La figure 8 est une vue analogue à la figure 6, montrant le dispositif de compensation automatique du jeu axial dans sa position sans charge du motoréducteur assemblé pour la ligne.
La figure 9 est une vue analogue à la figure 8 montrant le dispositif dans sa position en fonctionnement du motoréducteur.
La figure 10 est un diagramme illustrant la variation de l'effort axial développé par le carter sur la ligne d'arbre du motoréducteur, en fonction de la compression subie par l'amortisseur de son dispositif de compensation automatique du jeu.

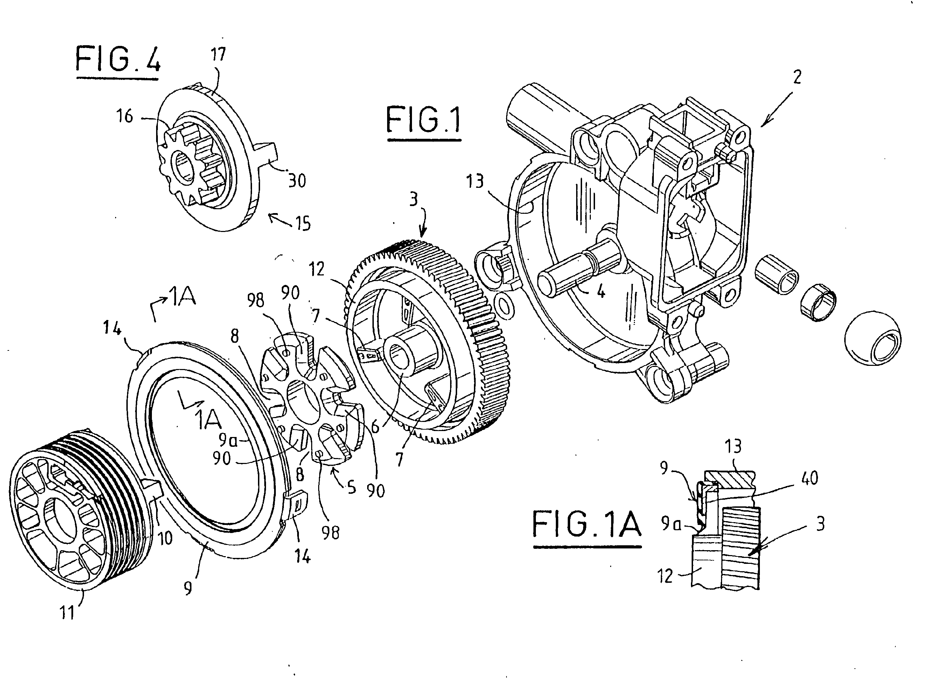

Le motoréducteur représenté aux figures 1 à 4 est destiné notamment à l'entraînement d'équipements de véhicules tels que lève-vitre électriques.

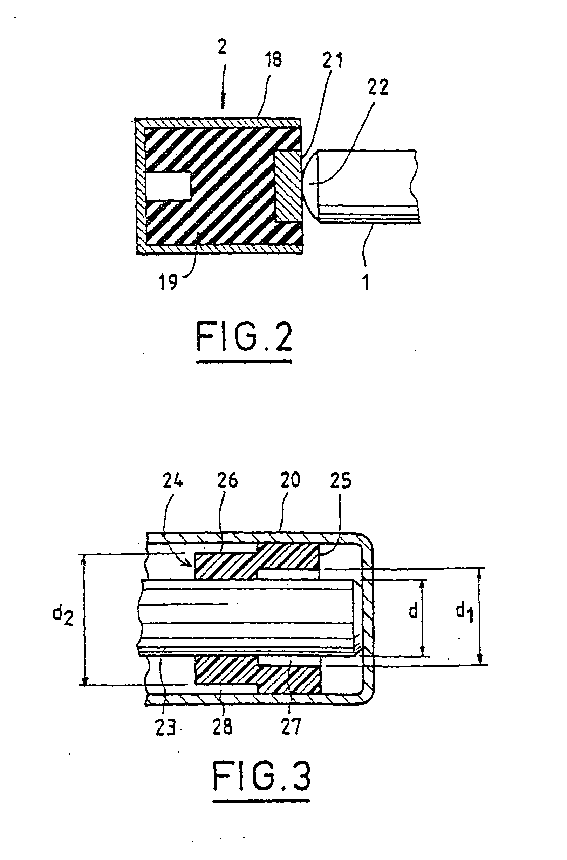

Il comprend un rotor (non représenté) pourvu d'un arbre d'induit dont on voit une extrémité 1 (figure 2), un carter réducteur 2 qui contient une roue dentée 3 montée sur un axe 4 perpendiculaire à l'arbre d'induit. Ce dernier comporte une vis sans fin (non représentée) avec laquelle la roue 3 est en prise. Le motoréducteur comprend également un amortisseur monobloc 5, logé à l'intérieur de la roue 3 et monté concentriquement au moyeu 6 de celle-ci, qui contient de plus des ailettes radiales 7 venant s'engager dans des encoches radiales correspondantes 8 de l'amortisseur 5 en matière élastique, de préférence élastomère. Des chanfreins 90 sont ménagés sur les bords des encoches 8.

L'amortisseur 5 est pourvu sur au moins l'une de ses faces de moyens de centrage dans une cavité délimitée entre la roue 3 et l'organe de sortie 11, Ces moyens sont dans l'exemple décrit constitués par des tétons 98 venus de moulage avec le reste de l'amortisseur et faisant saillie de ses faces.

Les tétons 98 assurent le centrage précité et réservent le volume nécessaire au gonflement de l'amortisseur 5 lors de sa compression.

Enfin, le carter réducteur 2 comprend un joint d'étanchéité annulaire 9 et un tambour 11 coaxial à l'amortisseur 5 et à la roue 3. Ce tambour est destiné à recevoir un câble notamment pour un lève vitre du type à câble, et constitue l'organe de sortie du motoréducteur. Le joint 9 est réalisé par surmoulage, par exemple sur une rondelle métallique 40 (fig.1A) emmanchée à force dans le carter réducteur 3. Le joint 9 comporte au moins une lèvre 9a en appui glissant sur une paroi annulaire intérieure 12 de la roue dentée 3. La paroi annulaire 12 est nécessitée par le fait que la liaison roue 3-moyeu 6 est à l'extérieur de ce dernier, et non intercalée entre l'axe 4 et la roue 3.

En variante, le joint pourrait être fixé sur la collerette et sa lèvre glisser sur la paroi du carter 3.

La paroi annulaire intérieure 12 fait légèrement saillie longitudinalement par rapport à la denture de la roue 3, en direction du tambour 11. Le joint annulaire 9 d'étanchéité disposé entre la paroi annulaire 12 et la paroi 13 du carter 2, assure ainsi l'étanchéité de ce dernier, sans nécessiter d'ajouter un couvercle.

A cet effet, le joint 9 peut être solidarisé soit avec la paroi 13 du carter 2, par exemple au moyen de pattes 14 d'encliquetage élastique dans le carter, et en appui glissant sur la périphérie de la paroi annulaire 12, soit être solidarisé avec cette dernière par tout moyen approprié par exemple par montage serrant dans l'espace situé entre la paroi annulaire 12 et la base de la roue dentée 23, en étant alors en appui glissant sur la paroi 13 du carter 2.

Le tambour 11 est pourvu de moyens de solidarisation en rotation avec l'amortisseur 5. Dans le mode de réalisation représenté, ces moyens sont constitués par des doigts 10 du tambour 11 venant s'engager dans des encoches radiales correspondantes 8. Les encoches 8 peuvent être par exemple au nombre de six, trois recevant des doigts 10 et trois recevant les ailettes 7. Grâce à cet agencement, le moyeu intermédiaire en matière plastique des motoréducteurs utilisés jusqu'à présent peut être supprimé, l'amortisseur 5 entraînant directement le tambour 11.

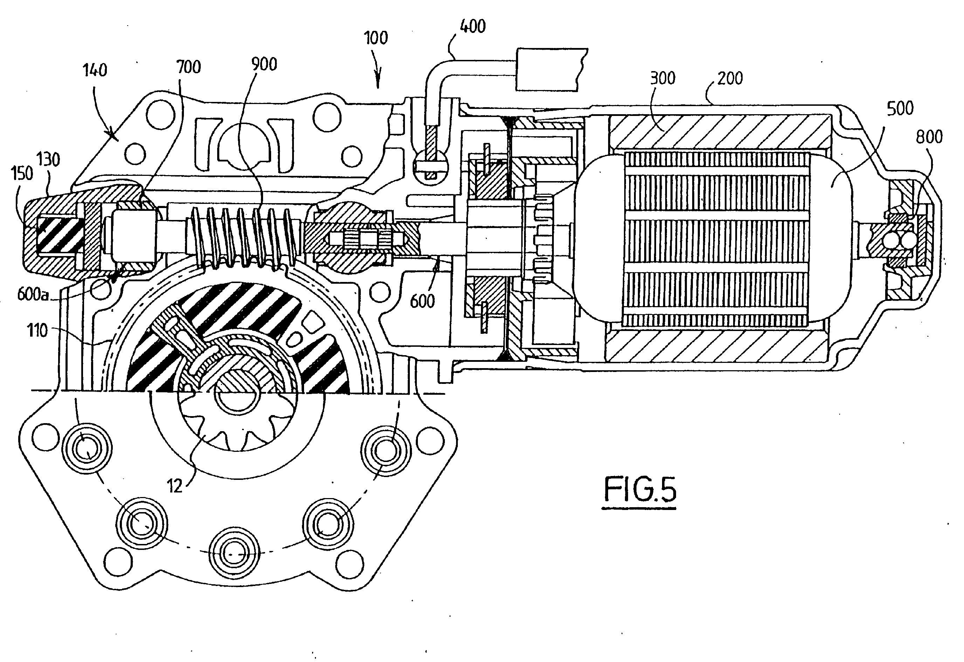

Dans un mode de réalisation, selon l'invention, le motoréducteur comporte un organe de sortie 15 constitué par un pignon 16 réalisé monopièce avec un moyeu 17 (Fig.4) intérieur à la paroi annulaire 12 de la roue dentée 3. L'organe de sortie 15 est réalisé de préférence en acier fritté, Le moyeu 17 est équipé de doigts 30 venant s'engager dans des encoches correspondantes 8 et permettant de solidariser l'organe 15 en rotation avec l'amortisseur 5.

Le motoréducteur est pourvu de moyens de réglage automatique du jeu axial entre l'extrémité 1 de l'arbre d'induit et la paroi 18 du carter 2 (Fig.2). Dans l'exemple représenté, ces moyens de réglage comprennent une butée amortisseuse 19 en un matériau élastique tel que du caoutchouc, remplissant le volume défini à cet endroit par la paroi 18, et une rondelle métallique 21 noyée dans la butée 19. Plus exactement la rondelle 21 est logée dans la face de la butée 19 tournée vers l'arbre 1, de telle façon que la surface de la rondelle 21 affleure la face transversale de la butée 19.

L'extrémité de l'arbre 1 est munie d'une capsule 22 en matière plastique, en appui contre la rondelle 21. L'ensemble constitué par l'arbre d'induit 1, sa capsule terminale 22, la rondelle 21 et l'amortisseur 19 est monté avec une légère précontrainte dans la paroi 18, afin de compenser automatiquement le jeu axial de l'arbre 1.

Suivant une particularité complémentaire du motoréducteur, l'extrémité 23 de l'arbre d'induit opposée à la butée 19 est montée dans une bague de roulement 24 constituée de deux parties étagées radialement 25, 26.

La première partie 25 a un diamètre extérieur égale à celui de la paroi intérieure du stator 20 sur laquelle elle est en appui, tandis que son diamètre intérieur d1 est supérieur au diamètre d de l'arbre 23. La seconde partie 26 possède un diamètre intérieure égal à celui d de l'arbre 23 sur lequel elle est en appui, et un diamètre extérieur d2 inférieur à celui de la paroi intérieure du stator 20.

Ainsi sont délimités un intervalle annulaire 27 entre l'extrémité 23 de l'arbre d'induit et la partie 25, et un autre intervalle annulaire 28 entre la partie 26 et le stator 20.

Cette bague étagée 24 améliore sensiblement la maîtrise du jeu de l'arbre 23, car sur sa partie 26 en contact avec l'arbre 23, le diamètre ne peut varier puisque cette partie 26 est distante de l'intervalle 28 de la paroi intérieure du stator 20. Les irrégularités de celle-ci se transmettent donc uniquement à la partie 25, à laquelle sont transmises les contraintes subies par la partie 26. Ainsi les oscillations de l'arbre 23 sont notablement réduites.

Le motoréducteur 100 illustré à la figure 5 est destiné notamment à l'entraînement d'équipements de véhicules, tels que lève-vitre électriques.

Il comprend, logés à l'intérieur d'un boîtier 200, un stator 300 pouvant être alimenté par des connexions électriques 400 de manière connue, un rotor 500 pourvu d'un arbre d'induit 600 dont les extrémités sont montées dans des paliers 700, 800 de roulement. Cet arbre d'induit porte une vis sans fin 900 en prise avec une roue dentée 110 pouvant entraîner un organe de sortie 120, qui lui-même entraîne l'équipement associé au motoréducteur, par exemple un lève-vitre, un toit ouvrant...

L'extrémité 600a de l'arbre d'induit 600 traversant le palier 700, situé au voisinage de la vis sans fin 900, coopère avec un dispositif 120 de compensation automatique du jeu axial entre l'extrémité 600a et la paroi 130 du carter réducteur 140, afin d'équilibrer les efforts axiaux F développés par l'arbre d'induit 600 pendant le fonctionnement du motoréducteur.

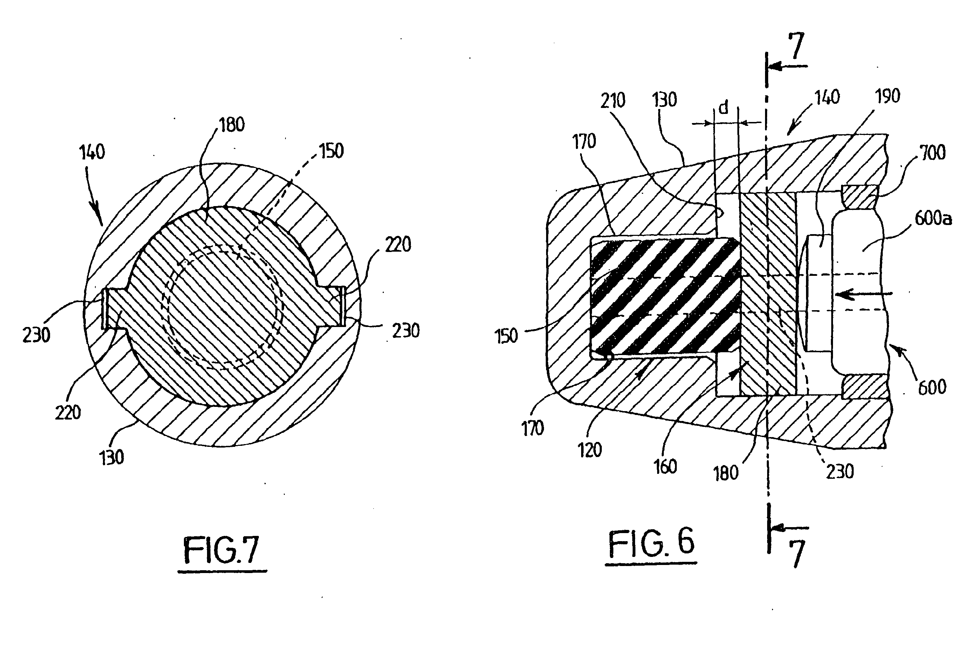

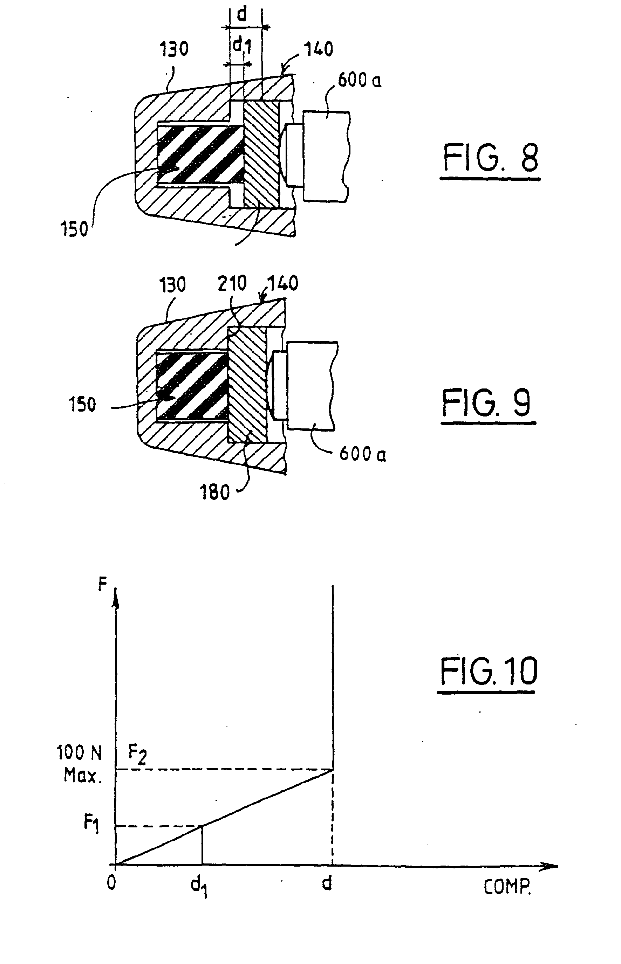

Dans le mode de réalisation représenté, ces moyens de réglage comprennent un amortisseur 150 en un matériau élastique tel qu'un élastomère, disposé avec un jeu annulaire radial (Fig.6) dans un logement terminal 170 de l'extrémité de la paroi 130 du carter 140, et une butée rigide 180 interposée entre l'extrémité de la paroi 130 du carter 140, et une butée rigide 180 interposée entre l'extrémité 600a de l'arbre 600 et l'amortisseur 150. La butée rigide 180 est de préférence métallique et forme une pastille par exemple cylindrique, en appui contre la face d'extrémité de l'amortisseur 150, constitué par exemple par un cylindre en matériau déformable, La butée 180 est d'autre part en contact avec une capsule terminale 190 fixée à l'extrémité 600a de l'arbre d'induit 600. La butée rigide 180 est déplaçable axialement dans le carter 140 sur une course prédéterminée d correspondant au jeu axial de la ligne d'arbre entre sa position au report hors charge (Fig.6) et sa position sous charge en fonctionnement du motoréducteur (Fig.9). La course d est limitée par un moyen d'arrêt, constitué dans l'exemple représenté par un épaulement transversal annulaire 210 agencé dans la paroi intérieure du carter 140, en regard de l'amortisseur 150.

La butée rigide 180 est pourvue de moyens antirotation autour de l'arbre de l'arbre d'induit 600. Dans le mode de réalisation illustré à la figure 7, ces moyens consistent en deux pattes 220 saillant radialement de la périphérie de la butée 180 et diamétralement opposées, et qui sont engagées dans des crantages correspondants 230 formés dans la paroi intérieure 130 du carter 140. Ces crantages constituent des rainures 230 qui s'étendent longitudinalement jusqu'au plan transversal de l'épaulement 210, afin de permettre le coulissement des pattes 220 dans ces rainures 230 lorsque la butée 180 parcourt la course d.

Le fonctionnement du dispositif de compensation automatique du jeu axial qui vient d'être décrit est le suivant.

Avant assemblage de la ligne d'arbre, la butée 180 est distante du jeu d de l'épaulement 210 (Fig.6). Après assemblage du motoréducteur et sans charge, au repos, la ligne d'arbre 600 est en précompression avec un effort F1 fonction de la cote d1 (figure 8), inférieure à d. Dans cette position, l'amortisseur 150 subit un effort de précompression compris par exemple entre 0 et 100 Newtons, et le jeu ou cote restant d1 résulte de l'empilement des dimensions axiales des pièces constitutives du motoréducteur (arbre 600, butées, carter 140, culasse etc.).

La cote ou jeu d1 ainsi que le jeu d sont illustrés sur le diagramme de la figure 600, qui montre que l'effort axial F exercé par l'arbre d'induit 600 sur la butée 180 et sur l'amortisseur 150 croît linéairement de F1 à F2, c'est à dire jusqu'à ce que la butée 180 vienne en arrêt contre l'épaulement transversal 210. L'effort maximum F2 subi par la butée 150 à ce moment est par exemple de 100 Newtons.

Dans le cas où le motoréducteur est en fonctionnement, lorsque l'effort axial F sur la ligne d'arbre dépasse la valeur prédéterminée F2, la butée métallique 180 vient donc en contact avec l'épaulement 210, lequel limite l'effort de compression sur l'amortisseur 150 à la valeur précitée.

Cette limitation évite un fluage du matériau élastique de l'amortisseur 150, et par conséquent sa détérioration par des efforts axiaux supérieurs à la valeur F2 atteinte lorsque la butée 180 vient en butée contre l'épaulement 210, Les efforts axiaux développés par l'arbre 600 augmentent alors brutalement (diagramme de la figure 10) et sont reportés directement sur l'épaulement 210 donc sur la paroi 130 du carter 140.

L'invention n'est pas limitée aux modes d'exécution représentés et peut comporter diverses variantes. Ainsi par exemple tout moyen antirotation de la butée rigide 180 peut être utilisé, une seule patte ou ergot 220 pouvant éventuellement être mise en oeuvre.

Le dispositif de compensation automatique du jeu axial de la ligne d'arbre est d'une réalisation aisée et par conséquent peu onéreuse, tout en ayant une longue durée de vie grâce à la limitation des efforts de compression sur l'amortisseur 150 qui évite sa détérioration comme précédemment exposé.

En variante, le joint 9 peut comporter plus d'une lèvre, par exemple deux.

Le mode de réalisation dans lequel l'organe de sortie du motoréducteur est un tambour ne fait pas partie de l'invention.

## Revendications

1. Motoréducteur, notamment pour l'entraînement d'équipements de véhicules, comprenant un rotor pourvu d'un arbre d'induit (1, 23), un carter réducteur (2), qui contient une vis sans fin en prise avec une roue dentée (3) contenant un amortisseur (5), ainsi que des moyens d'étanchéité du carter, et un organe de sortie (15) entraîné en rotation par l'amortisseur, motoréducteur dans lequel les moyens d'étanchéité comprennent une paroi annulaire (12) de la roue dentée (3) et un joint (9) disposé entre ladite paroi (12) et la paroi (13) du carter, ce joint étant solidarisé soit avec le carter et en appui glissant sur la paroi annulaire, soit avec la paroi annulaire et en appui glissant sur le carter, l'étanchéité étant réalisée entre une lèvre (9a) au moins du joint (9) et ladite paroi annulaire, l'organe de sortie (15) étant pourvu de moyens de solidarisation en rotation avec l'amortisseur, **caractérisé en ce que** l'organe de sortie (15) est un pignon (16) réalisé monopièce avec un moyeu (17) intérieur à la roue dentée (3), et le moyeu est muni de doigts (30) coopérant avec l'amortisseur (5) pour solidariser l'organe de sortie en rotation avec l'amortisseur.

2. Motoréducteur selon la revendication 1, **caractérisé en ce que** le pignon (16) est en acier fritté.

## Claims

1. Geared motor, particularly for driving vehicle fittings, comprising a rotor provided with a rotor shaft (1, 23), a reduction-gearbox (2) which contains a worm in mesh with a gear wheel (3) containing a shock absorber (5), and means for sealing the box, and an output member (15), the rotation of which is driven by the shock absorber, in which geared motor the sealing means comprise an annular wall (12) of the gear wheel (3) and a seal (9) positioned between the said wall (12) and the wall (13) of the box, this seal being secured either to the box and in sliding contact with the annular wall or to the annular wall and in sliding contact with the box, sealing being achieved between a lip (9a) at least of the seal (9) and the said annular wall, the output member (15) being provided with means for ensuring that it rotates as one with the shock absorber, **characterized in that** the output member (15) is a pinion (16) made as one piece with a hub (17) internal to the gear wheel (3), and the hub is equipped with fingers (30) that collaborate with the shock absorber (5) in order to ensure that the output member rotates as one with the shock absorber.

2. Geared motor according to Claim 1, **characterized in that** the pinion (16) is made of sintered steel.

## Patentansprüche

1. Getriebemotor insbesondere zum Antrieb von Fahrzeug-Zubehörteilen, umfassend einen mit einer Ankerwelle (1, 23) versehenen Läufer, ein Untersetzungsgetriebegehäuse (2), das eine Schnecke, die mit einem einen Dämpfer (5) enthaltenden Zahnrad (3) in Eingriff ist, sowie Mittel zum Abdichten des Gehäuses enthält, und ein Austrittsorgan (15), das durch den Dämpfer in Drehung versetzt wird, wobei in diesem Getriebemotor die Mittel zum Abdichten eine ringförmige Wand (12) des Zahnrads (3) und eine zwischen dieser Wand (12) und der Wand (13) des Gehäuses angeordnete Dichtung (9) umfassen, die entweder mit dem Gehäuse fest verbunden ist und an der ringförmigen Wand in gleitender Anlage ist oder mit der ringförmigen Wand fest verbunden ist und an dem Gehäuse in gleitender Anlage ist, wobei die Abdichtung zwischen mindestens einer Lippe (9a) der Dichtung (9) und dieser ringförmigen Wand hergestellt ist, wobei das Austrittsorgan (15) mit Mitteln zur festen Verbindung mit dem Dämpfer bezüglich Drehung versehen ist, **dadurch gekennzeichnet, dass** das Austrittsorgan (15) ein Zahnrad (16) ist, das mit einer Nabe (17) im Inneren des Zahnrads (3) einstückig ausgeführt ist, und die Nabe mit Fingern (30) versehen ist, die mit dem Dämpfer (5) zusammenwirken, um das Austrittsorgan mit dem Dämpfer bezüglich Drehung fest zu verbinden.

2. Getriebemotor nach Anspruch 1, **dadurch gekennzeichnet, dass** das Zahnrad (16) aus Sinterstahl besteht.
